# EUROPEAN PATENT APPLICATION

(11) **EP 1 739 660 A2**
(43) Date of publication of application: **03.01.2007**
(21) Application number: 06009960.3
(22) Date of filing: 15.05.2006
(51) Int. Cl.: G11B 5/84

(54) **Manufacturing method of tape-form recording medium**

(30) Priority: 22.06.2005 JP 2005182448
(71) Applicant: FUJI PHOTO FILM CO., LTD., Minamiashigara-shi, Kanagawa-ken 250-0193 (JP)
(72) Inventor: Kakuishi, Yutaka, Odawara Kanagawa (JP); Ryoke, Katsumi, Odawara Kanagawa (JP); Meguro, Katsuhiko, Odawara Kanagawa (JP)
(74) Representative: HOFFMANN EITLE

(57) **Abstract**

A manufacturing method of a tape-form recording medium (MT) in the present invention includes a raw web manufacturing process (S1) of forming a data recording layer (3) on one side of a substrate (2) and a back coat layer (4) having a minute convexity (4a) on the other side thereof, and thus manufacturing raw web (1) of the tape-form recording medium; a raw web winding process (S2) of winding the raw web with a predetermined tension; a raw web rewinding process (S5) of rewinding the raw web; and a raw web heating process (S6) of heating the rewound raw web.

## Description

### BACKGROUND OF THE INVENTION

### 1. FIELD OF THE INVENTION

The present invention relates to a manufacturing method of a tape-form recording medium.

### 2. DESCRIPTION OF THE RELATED ART

As a conventional manufacturing method of a magnetic tape is known a method of: manufacturing a magnetic tape bulk roll by coating a coating liquid for forming a magnetic layer containing a magnetic material, a bonding agent, and a solvent on one side of a magnetic tape substrate sent out from a magnetic tape substrate bulk roll, and then orienting, drying, and winding the raw web; slitting a peripheral face of the magnetic tape bulk roll from one edge to the other edge for every tape width; and winding the magnetic tape from the slit raw web for every cassette tape, using a tape winder (for example, see paragraphs 0022 to 0024 in Japanese Patent Laid-Open Publication No. 2002-123934).

At this time a mirror-finish treatment is dispensed to the magnetic tape substrate where such a coating liquid for forming a magnetic layer is coated by a calendar device, and thereafter, the substrate is wound. In addition, the magnetic tape bulk roll is stored, for example, at an ambient temperature of around 70 degrees Celsius for a predetermined time (for example, around 36 hours) in a space adjusted in a state of a low humidity, and a strain of a base due to such hot curing of a coated film is relieved.

In addition, on the other side of the magnetic tape substrate is formed, for example, a back coat layer containing carbon black like a rough particle of 150 to 300 nm in average particle size. Then forming a minute convexity on a surface of the back coat layer and decreasing a contact area by such the carbon black like the rough particle, a decrease of a friction coefficient and a running stability are improved.

Whereas, if the minute convexity is formed on the surface of the back coat layer, it contacts the surface of the magnetic layer in a step of winding the magnetic tape substrate and manufacturing the magnetic tape bulk roll. Then, if leaving the magnetic tape bulk roll for a long time in the state and/or heating it, there is a problem that a minute concavity results in being formed on the surface of the magnetic layer.

If there exists a concavity on a surface of a data recording layer of a tape-form recording medium represented by such the magnetic tape described above, an occurrence frequency of a dropout (signal dropout) in reading/writing data increases, and thereby a quality of the tape-form recording medium results in lowering. In addition, because as a track width narrows, an influence of such the concavity becomes larger, it is a large obstacle in increasing a recording capacity (recording density) of the tape-form recording medium.

Consequently, a tape-form recording medium more superior in running stability and less in occurrence frequency of a dropout, and a manufacturing method thereof are strongly requested. In addition, a tape-form recording medium, where even if a recording capacity is increased, the occurrence frequency of the dropout does not increase, and a manufacturing method thereof are strongly requested.

### SUMMARY OF THE INVENTION

As a result of devoting themselves to a study, the inventors have discovered that: a concavity formed on a surface of a magnetic tape is recovered if a raw web is wound with a predetermined tension, and then the magnetic tape is rewound and heated. The present invention is performed, based on such the discovery.

A first aspect of the present invention is a manufacturing method of a tape-form recording medium comprising: a raw web manufacturing process of forming a data recording layer on one side of a substrate and a back coat layer having a minute convexity on the other side thereof, and thus manufacturing raw web of the tape-form recording medium; a raw web winding process of winding the raw web with a predetermined tension; a raw web rewinding process of rewinding the raw web; and a raw web heating process of heating the rewound raw web.

In accordance with such the method, firstly, a data recording layer is formed on one side of a substrate and a back coat layer having a minute convexity is formed on the other side thereof, and thereby, raw web of a tape-form recording medium is manufactured (raw web manufacturing process). Secondly, the raw web is wound with a predetermined tension, and is made into a state of a bulk roll (raw web winding process). At this time a minute convexity of a back coat layer is pushed to a surface of the data recording layer and a concavity is formed. Then, if the wound raw web is rewound (raw web rewinding process) and is heated, the data recording layer expands and the concavity is recovered.

Meanwhile, the raw web rewinding process is done in order to make a storage and a heat treatment (strain relief) thereafter easily performed.

Here, because a surface pressure is stronger at a portion near a core of a bulk roll than at a portion near a surface thereof, a concavity on a surface of a data recording layer becomes larger (deeper) at the former portion than at the latter. On the other hand, if raw web once wound is rewound, the raw web wound near the core of the bulk roll in firstly being wound results in moving near the surface of the bulk roll. Therefore, the surface pressure applied to the larger portion in concavity becomes less, and thus it is enabled to effectively recover the concavity. Meanwhile, with respect to the raw web wound near the surface of the bulk roll, because the concavity is originally smaller and further a tension when rewound lessens, it is enabled to recover the concavity. In addition, because positions of a minute convexity and the concavity are displaced by being rewound, it becomes easier for the concavity to recover.

Meanwhile, although a tension of raw web in the raw web rewinding process is not limited, it may also be adapted to rewind the raw web with a tension smaller (weaker) than that of the raw web in the raw web winding process.

Here, a data recording layer may also be any one of a magnetic layer for recording a change of a magnetic field as a signal and an optical recording layer containing a metal material and an organic dye recording material that cause a crystalline change (phase change) by radiation of a laser light.

In addition, a width of raw web may be any one of the width (for example, around 1 m) of being able to form a plurality of tape-form recording media by being slit and a width (for example, 1/2 inch (12.65 mm)) corresponding to one tape-form recording medium.

A second aspect of the present invention is the manufacturing method of the tape-form recording medium described in the first aspect of the invention, which the method further comprises a strain relief process of heating the raw web wound and relieving a strain of the raw web after the raw web winding process and before the raw web rewinding process.

In accordance with such the method, because a strain of raw web, for example, such a strain of a substrate is relieved by drying a coated data recording layer, it is enabled to improve a quality of the tape-form recording medium. In order to relieve the strain of the raw web, it is effective to leave the raw web for a predetermined time under a high temperature environment. At this time, although because the raw web is warmed and tends to be deformed, the minute convexity of the back coat layer is pushed to the surface of the data recording layer and a concavity tends to be formed; however, because the concavity can be recovered by the raw web rewinding process and the raw web heating process, the quality of the tape-form recording medium does not lower.

A third aspect of the present invention is the manufacturing method of the tape-form recording medium described in the first aspect of the invention, which the method further comprises a raw web slitting process of slitting the raw web after the raw web winding process and before the raw web rewinding process, wherein the raw web rewinding process winds the slit raw web.

In addition, a fourth aspect of the present invention is the manufacturing method of the tape-form recording medium described in the second aspect of the invention, which the method further comprises a raw web slitting process of slitting the raw web after the strain relief process and before the raw web rewinding process, wherein the raw web rewinding process winds the slit raw web.

In accordance with such the method, because wide raw web is slit and then is rewound, it is enabled to narrow a width of the raw web in the raw web heating process. Therefore, a heating effect results in early and uniformly reaching till a middle portion in width directions of the raw web, and thus it is enabled to effectively recover a concavity on a surface of a data recording layer.

A fifth aspect of the present invention is the manufacturing method of the tape-form recording medium described in any one of the first to fourth aspects of the invention, wherein the raw web is rewound on a hub having a taper on a tape winding face in the raw web rewinding process.

In accordance with such the method, because raw web is rewound on a hub (hereinafter referred to as "taper hub" in some case) having a taper on a tape winding face in the raw web rewinding process, the rewound raw web becomes a state of being wound on the taper hub. Then because the raw web is heated in the state of being wound on the taper hub in the following raw web heating process, a concavity on a surface of a data recording layer recovers and a curvature results in being given to the raw web. At this time, if a width of the raw web is adjusted to that of the tape-form recording medium at a step before the raw web is rewound on the taper hub, it is enabled to obtain the tape-form recording medium where there exists no concavity on the data recording layer and the curvature is given in width directions along longitudinal directions. As an adjustment method of a tape width, raw web having a width matching that of a tape-form recording medium of an object may be initially used, or raw web may also be slit to a width of the tape-form recording medium, providing the process of slitting the raw web before the raw web heating process, as described in the third and fourth aspects.

Meanwhile, the data recording layer is a magnetic layer and preferably 1 to 150 nm in thickness. In order to increase a memory capacity of a tape-form recording medium, it is requested to thin the data recording layer, narrowing a width of a data track, and make the medium higher density; if performing so, an influence of a concavity of the data recording layer relatively becomes larger, and an off-track of data results in frequently occurring in a method of a usual manufacturing method, that is, the method of rewinding raw web and not heating it. On the other hand, if the invention of the application is applied to manufacturing a magnetic tape of a higher recording density of which a thickness of a magnetic layer is 1 to 150 nm, because the concavity of the data recording layer can be recovered, the off-track does not occur, for example, by making a track density 1500 tracks/inch even if the memory capacity of the tape-form recording medium is increased.

### BRIEF DESCRIPTION OF THE DRAWINGS

FIGS. 1A and 1B are illustration drawings schematically illustrating manufacturing equipment of a magnetic tape; FIGS. 1A and 1B respectively show apparatuses corresponding from a raw web manufacturing process to a strain relief process and from a raw web slitting process to a raw web heating process.
FIGS. 2A and 2B are enlarged section drawings showing a configuration of raw web and a magnetic tape; FIGS. 2A and 2B respectively show the raw web after a strain relief process and the magnetic tape after a raw web heating process.
FIGS. 3A and 3B are views showing a hub; FIG. 3A is a perspective view of the hub; and FIG. 3B is a section view showing a state of raw web being wound.
FIG. 4 is a plan view showing a magnetic tape after being heated with a heating apparatus.
FIG. 5 is a flowchart showing a manufacturing method of a magnetic tape related to an embodiment of the present invention.
FIG. 6 is a table showing a test condition and measurement result of examples and comparison examples.

### BEST MODES FOR CARRYING OUT THE INVENTION

Here will be described a best mode for carrying out the present invention in detail, referring to drawings as needed, In a description a same symbol will be appended to a same component, and a duplicated description will be omitted. Here, as an example will be described a manufacturing method of a magnetic tape, one of a tape-form recording medium.

### <Manufactvring Equipment of Magnetic Tape>

Firstly will be described manufacturing equipment of a magnetic tape for realizing a manufacturing method of the magnetic tape related to the present invention.

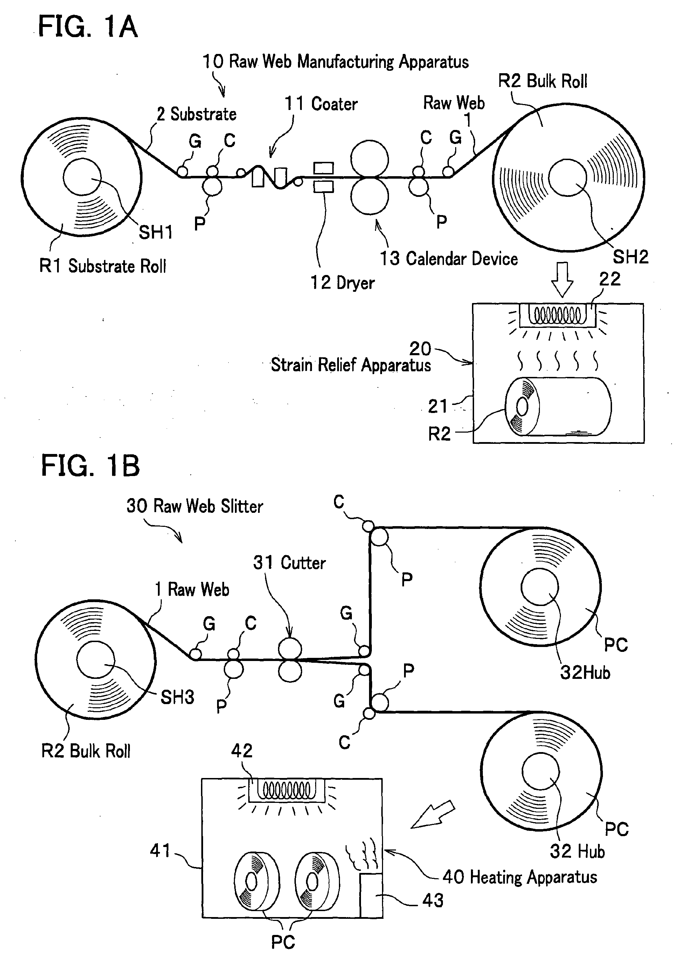

The manufacturing equipment of the magnetic tape is as shown in FIGS. 1A and 1B configured with a raw web manufacturing apparatus 10 for manufacturing raw web 1, a strain relief apparatus 20 for reducing a strain of the raw web 1, a raw web slitter 30 for slitting the raw web 1 into a width of a magnetic tape MT, and a heating apparatus 40 for heating the slit raw web 1.

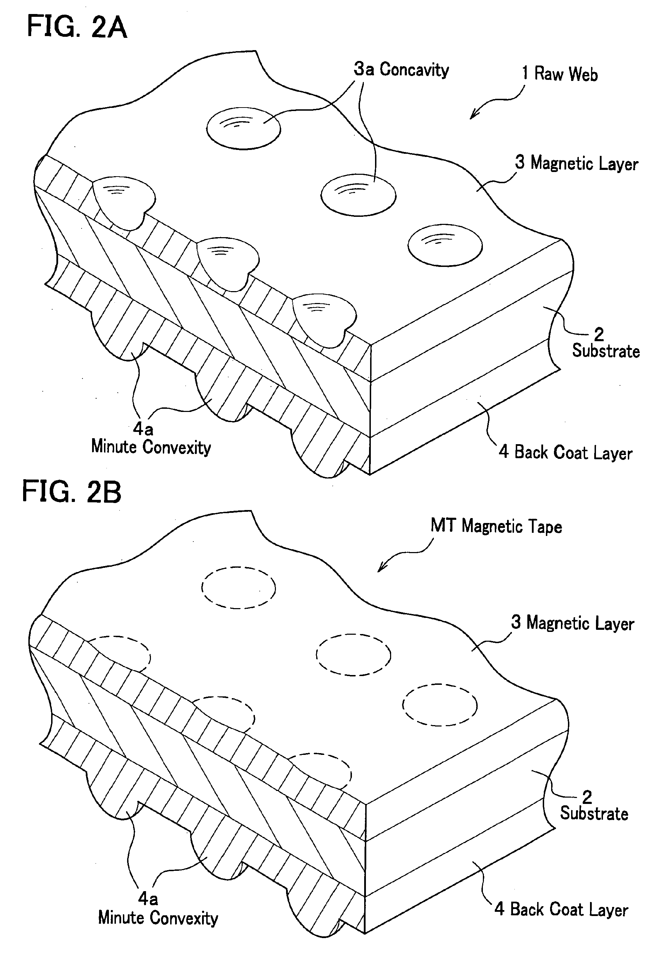

The raw web manufacturing apparatus 10 comprises, as shown in FIG. 1A, a sending-out shaft SH1 for sending out a substrate 2, a coater 11 for coating a magnetic-layer-use coating liquid and a back-coat-layer-use coating liquid on the substrate 2, a dryer 12 for drying the coated coating liquids, a calendar device13 for smoothly processing a surface of the dried magnetic-layer-use coating liquid, and a winding shaft SH2 of a winding core for winding the substrate 2 (that is, raw web 1) where a magnetic layer 3 and a back coat layer 4 (see FIG. 2) are formed. In addition, at an upstream side of the coater 11 and a downstream side of the calendar device13 are respectively provided pinch rollers P and capstan rollers C for carrying the raw web 1 or the substrate 2. In addition, on a running path of the raw web 1 and the substrate 2 are provided guide rollers G, regulating the running path.

The sending-out shaft SH1 is a shaft for attaching a substrate roll R1 consisting of the substrate 2 wound around like a roll, and sends out the substrate 2 onto a running path by being rotated with a driving apparatus (not shown). The sent-out substrate 2 is adapted to be carried to the coater 11 by the pinch roller P and the capstan roller C.

Here, the substrate 2 is a film-form member becoming a base of the magnetic tape MT, and it is preferable to use, for example, a synthetic resin film such as polyesters, polyolefins (for example, polypropylene), cellulose derivatives, polycarbonate, polyamide, polyimide.

The coater 11 is an apparatus for coating a magnetic-layer-use coating liquid on a front side of the substrate 2 and a back-coat-layer-use coating liquid on a back side. The coater 11 can be selected out of known apparatuses as needed. For example, although not shown, respectively disposing two members comprising through holes for vomiting a coating liquid so as to contact the front side and back side of the substrate 2 and making the two members run while making the front and back sides contact the two members for vomiting the coating liquid from the through holes, and thereby, it also may be adapted to coat the coating liquid on the substrate 2.

Here, the magnetic-layer-use coating liquid is configured to mainly contain a ferromagnetic powder, a bonding agent, and an organic solvent. In addition, the back-coat-layer-use coating liquid is configured to mainly contain carbon black and a bonding agent for forming minute convexities 4a (see FIGS. 2A and 2B). A particle diameter of the carbon black is preferably around 150 to 300 nm. In addition, according to a method similar to the above, an under coat layer and/or a non-magnetic layer may also be formed between the substrate 2 and the magnetic layer 3. Meanwhile, to the back-coat-layer-use coating liquid are added a dispersing agent, a lubricant, an antistatic agent, a plasticizer, a stabilizer, and antirust.

As a ferromagnetic powder can be used, for example, a ferromagnetic iron oxide particle such as γ-Fe₂O₃, Fe₃O₄, and cobalt coated γ-Fe₂O₃; a ferromagnetic dioxide chrome particle; a ferromagnetic metal particle consisting of metal such as Fe, Co, and Ni, and alloy containing these; a hexagonal ferrite particulate like a hexagonal plate; and the like.

In addition, as a bonding agent can be used a polymer such as urethane, vinyl chloride, vinyl acetate, vinyl alcohol, vinylidene chloride, acrylic ester, styrene, butadiene, and acrylic nitrile; a copolymer where not less than two kinds of these are combined; polyester resin; epoxy resin; and the like.

As an organic solvent can be used such ethers, esters, ketones, aromatic hydrocarbon, aliphatic hydrocarbon, and chlorinated hydrocarbon.

The dryer 12 is an apparatus for drying and curing a magnetic-layer-use coating liquid and a back-coat-layer-use coating liquid coated on the substrate 2. The dryer 12 is adapted, for example, to add heat to the substrate 2 passing inside the dryer 12 and to dry the coating liquids coated on the substrate 2.

The calendar device13 is an apparatus for smoothing the front side of the magnetic layer 3. The calendar device13 comprises two rollers, and is adapted to pinch and pressurize between the rollers the substrate 2 where the magnetic layer 3 and the back coat layer 4 are formed. Meanwhile, a surface roughness of the magnetic layer 3 and the back coat layer 4 can be adjusted by such a material, surface property, and pressure of the rollers used. The coating liquids are dried and cured, thereby the magnetic layer 3 and the back coat layer 4 are respectively formed on the front and back sides of the substrate 2, and thus the raw web 1 is formed.

The winding shaft SH2 of a winding core winds the raw web 1 manufactured. The winding shaft SH2 is adapted to wind the raw web 1 carried by being rotated with a driving apparatus (not shown). The wound raw web 1 becomes a bulk roll R2. The driving apparatus is configured to be able to adjust a rotation torque by a torque adjustment mechanism (not shown) and thereby to adjust a winding tension of the raw web 1. As a driving apparatus, for example, such a voltage control alternating motor can be used. In addition, as a torque adjustment mechanism, for example, a voltage control apparatus such as an OP (Operational) amp can be used.

The strain relief apparatus 20 is an apparatus for reducing a strain accumulated in the raw web 1. The strain relief apparatus 20 comprises a storing unit 21 for storing the bulk roll R2 and a heater 22 for heating an inner space of the storing unit 21. For example, if a coating liquid coated on the substrate 2 is dried and cured and/or the substrate 2 itself is heated, a strain is accumulated in the raw web 1. The strain relief apparatus 20 relieves a stress by heating the raw web 1, and thereby removes the strain.

FIG. 2A is a drawing showing the raw web 1 after taken out of the strain relief apparatus 20.

Because the back coat layer 4 contains carbon black of a predetermined particle diameter, the minute convexities 4a are formed with the carbon black. By such the minute convexities 4a is decreased a friction between the magnetic layer 3 and the back coat layer 4, and a running stability of the magnetic tape MT is improved.

On the other hand, because the raw web 1 is wound like a roll, the minute convexities 4a of the back coat layer 4 of the raw web 1 wound on the front side of the magnetic layer 3 result in contacting that of the magnetic layer 3 of the raw web 1 wound inside (shaft side). Then because the raw web 1 is warmed by the strain relief apparatus 20 in a state of the bulk roll R2 in order to remove an accumulated strain, it tends to be deformed. Therefore, as shown in FIG. 2A, concavities 3a corresponding to the convexities 4a result in being formed on the front side of the magnetic layer 3.

A description will be continued, returning to FIGS. 1A and 1B.

The raw web slitter 30 comprises, as shown in FIG. 1B, a sending-out shaft SH3 where the bulk roll R2 is attached, a cutter 31 for slitting the raw web 1, hubs 32, 32 of other winding cores. In addition, at upstream sides of the cutter 31 and the hubs 32, 32 are disposed the pinch rollers P and the capstan rollers C, respectively. In addition, at the downstream side of the cutter 31 are provided the guide rollers G for leading the slit raw web 1 to each of the hubs 32, 32.

The sending-out shaft SH3 is a shaft for attaching the bulk roll R2 where a strain is relieved, and sends out the raw web 1 onto a running path by being rotated by a driving apparatus (not shown). The sent-out raw web 1 is adapted to be carried to the cutter 31 by the pinch roller P and the capstan roller C.

The cutter 31 slits the raw web 1 into a width of the magnetic tape MT, and in the embodiment, is configured with a round knife cutter. The slit raw web 1 is led to the hubs 32, 32 by the guide rollers G, G, respectively.

Each of the hubs 32, 32 winds the raw web 1 slit into a same width. The hub 32 is connected to a driving apparatus (not shown) and adapted to be rotatable. The driving apparatus is configured to be able to adjust a rotation torque by a torque adjustment mechanism (not shown) and thereby to adjust a tension for winding the raw web 1. As a driving apparatus, for example, such a voltage control alternating motor can be used. In addition, as a torque adjustment mechanism, for example, a voltage control apparatus such as an OP amp can be used.

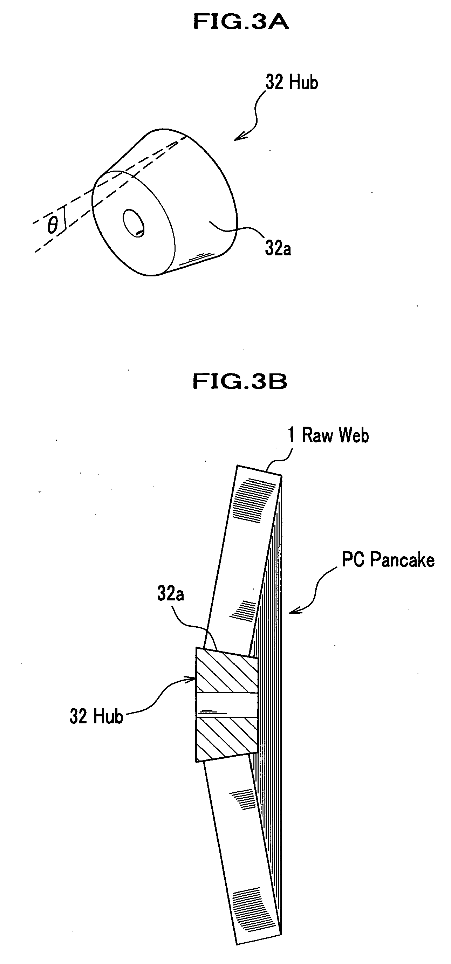

The hub 32 related to the embodiment expresses a truncated cone form shown in FIG. 3A. In other words, a winding face 32a of the hub 32 is tilted by θ degree with respect to an axial direction thereof. Therefore, a pancake PC formed by winding the raw web 1 around the winding face 32a of the hub 32 becomes like a mortar as shown in FIG. 3B. In addition, if rewinding the raw web 1 on the hub 32, the raw web 1 positioned near a core of a bulk roll 2 results in being positioned near a surface of the pancake PC; the raw web 1 positioned near a surface of the bulk roll 2 results in being positioned near a core (hub 32) of the pancake PC.

The heating apparatus 40 recovers the concavities 3a formed on the magnetic layer 3 of the raw web 1 by heating (performing a heat treatment for) the raw web 1. As shown in FIG. 1B, the heating apparatus 40 comprises a storing unit 41 for storing pancakes PC, the heater 42 for heating a space within the storing unit 41, and a humidifier 43 for giving a humidity to the space within the unit 41. It is preferable in the storing unit 41 to use a material higher in adiathermancy and to form a size that can store a plurality of pancakes PC.

A temperature within the storing unit 41 is preferably around 40 to 60 degrees Celsius, and more preferably around 50 to 60 degrees Celsius. In addition, a humidity is preferably around 20 to 80%, and more preferably around 40 to 60%. In addition, a storing time is preferably around 12 to 72 hours, and more preferably around 12 to 48 hours. The raw web 1 is left inside the storing unit 41 in a state of the pancakes PC, and the concavities 3a are adapted to recover. Meanwhile, because it is preferable that there exists a proper humidity in order to recover the concavities 3a, in the embodiment is provided the humidifier 43 inside the heating apparatus 40.

FIG. 2B is an enlarged perspective view showing the magnetic tape MT after being heated by the heating apparatus 40.

The raw web 1 is relieved in stress by being heated, and as shown in FIG. 2B, the concavities 3a formed on the surface of the magnetic layer 3 recover. At this time, because the raw web 1 positioned near the core of the bulk roll 2 is moved near the surface of the pancake PC by being rewound on the hub 32, a surface pressure becomes smaller and a strain tends to recover. In addition, because positions of the minute convexities 4a and the concavities 3a are displaced due to the raw web 1 being rewound, the concavities 3a result in tending to recover. Furthermore, because the raw web 1 is rewound on the hub 32 with a tension smaller than that in being wound on the winding shaft SH2 in the raw web manufacturing apparatus 10, the concavities 3a of the raw web 1 positioned near the core (hub 32) of the pancake PC also tend to recover.

Meanwhile, although in the embodiment the raw web 1 is assumed to be rewound on the hub 32 with a tension smaller than that in being wound on the winding shaft SH2 in the raw web manufacturing apparatus 10, the embodiment is not limited thereto; the raw web 1may also be assumed to be rewound on the hub 32 with a tension equal to or larger (stronger) than that in being wound on the winding shaft SH2 in the apparatus 10. In such the case it is enabled to recover the concavities 3a of the raw web 1 because of the above reasons.

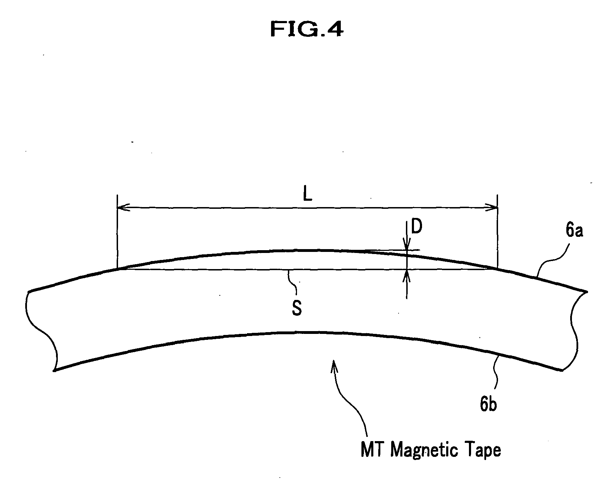

The raw web 1 wound around the taper hub 32 is heated by the heating apparatus 40 and thereby, as shown in FIG. 4, becomes a state of being curved in width directions along longitudinal directions thereof. To describe more in detail, in the raw web 1 wound around like a mortar because a circumference of outside (left in FIG. 3B) of the mortar is longer than that of inside (right in FIG. 3B) thereof, a side edge 6a positioned at the outside of the mortar results in being elongated more than a side edge 6b positioned at the inside of thereof. As a result, the raw web 1 results in being curved in a form of making the side edge 6a side convex. Thus the magnetic tape MT is completed.

Meanwhile, the magnetic tape MT is preferably around 0.5 mm to 4.0 mm in a maximum distance D between the side edge 6a and a baseline S connecting two points on the side edge 6a distant by a distance L=1 m as shown in FIG. 4. Thus if a winding tendency of a predetermined curved form is given to the magnetic tape MT, a preferable winding form is ensured, a tape running is stabilized, and a performance of a servo tracking is improved.

Subsequently, the manufacturing method of the magnetic tape MT will be described.

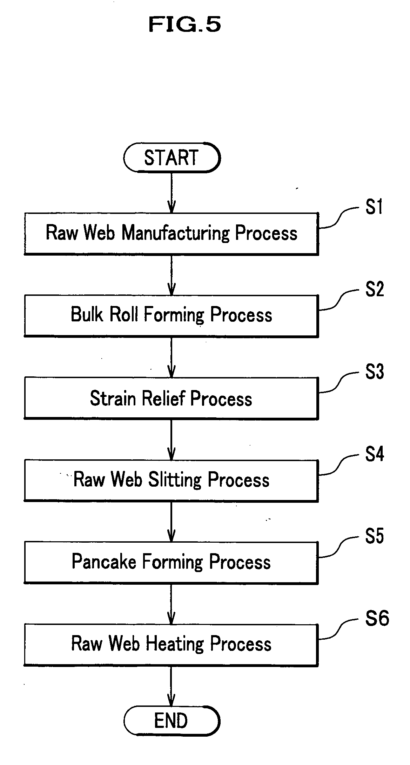

As shown in FIG. 5 (see FIGS. 1A to 4 as needed), the manufacturing method of the magnetic tape MT related to the embodiment is configured with:
a raw web manufacturing process S1 of forming the magnetic layer 3 and the back coat layer 4 on the substrate 2; a raw web winding process S2 of winding the raw web 1 manufactured; a strain relief process S3 of relieving a strain accumulated in the raw web 1 in the manufacturing processes; a raw web slitting process S4 of cutting the raw web 1 into a width of the magnetic tape MT; a raw web rewinding process S5 of rewinding the slit raw web 1; and
a raw web heating process S6 of heating the rewound raw web 1 and recovering the concavities 3a of the magnetic layer 3. Each of these processes is realized by the manufacturing equipment of the magnetic tape MT shown in FIGS. 1A and 1B. Hereafter will be described the manufacturing method of the magnetic tape MT in detail, referring to FIGS. 1A to 5.

### <<Raw Web Manufacturing Process>>

Firstly, the substrate 2 sent out from the substrate roll R1 is, as shown in FIG. 1A, carried by the pinch roller P and the capstan roller C to the coater 11. The coater 11coats a magnetic-layer-use coating liquid on the front side of the substrate 2 and a back-coat-layer-use coating liquid on the back side thereof. The substrate 2 where the magnetic-layer-use coating liquid and the back-coat-layer-use coating liquid are coated is carried to the dryer 12. The dryer 12 dries and cures the magnetic-layer-use coating liquid and the back-coat-layer-use coating liquid. Thus, on the front side and back side of the substrate 2 are formed the magnetic layer 3 and the back coat layer 4, respectively. The substrate 2 where the magnetic layer 3 and the back coat layer 4 are formed is carried to the calendar device13, and the front side of the magnetic layer 3 is smoothed by the calendar device13. Thus the raw web 1 is manufactured.

### <<Raw Web Winding Process>>

The raw web 1 where the front side of the magnetic layer 3 is smoothed is wound with a predetermined tension by the winding shaft SH2, and becomes the bulk roll R2. Thus the minute convexities 4a of the back coat layer 4 are pushed to the front side of the magnetic layer 3 and result in digging into it.

### <<Strain Relief Process>>

The bulk roll R2 is stored within the storing unit 21 of the strain relief apparatus 20 and is left for around 36 hours in a space made a state of, for example, a temperature of 70 degrees Celsius and a lower humidity. Thus a strain accumulated in the raw web 1 is relieved. On the other hand, because the front side of the magnetic layer 3 results in being warmed in a state of being pushed to the minute convexities 4a of the back coat layer 4, the concavities 3a result in being formed at a portion where the front side contacts the minute convexities 4a (see FIG. 2A).

### <<Raw Web Slitting Process>

The bulk roll R2 where a strain is relieved is set, as shown in FIG. 1B, on the sending-out shaft SH3 of the raw web slitter 30. The raw web 1 sent out from the bulk roll R2 is carried to the cutter 31 by the pinch roller P and the capstan roller C. The cutter 31 slits the carried raw web 1 so as to be equal to a width of the magnetic tape MT.

### <<<Raw Web Rewinding Process>>

The slit raw web 1 is, as shown in FIG. 1B, branched along the guide rollers G and is wound on each of the hubs 32, 32. At this time, by adjusting a torque of a driving device for rotating the hub 32, the raw web 1 is adapted to be wound on the hub 32 with a tension weaker than that of when the bulk roll 2 is formed. Thus a force by which the back coat layer 4 pushes the magnetic layer 3 becomes weaker, and a recovery of the concavities 3a becomes easier.

Meanwhile, because the hub 32 has a taper on the winding face 32a as shown in FIG. 3A, the raw web 1 rewound on the hub 32 becomes the pancake PC expressing like a mortar (see FIG. 3B).

### <<Raw Web Heating Process>>

The pancakes PC, PC made like a mortar are stored within the storing unit 41 of the heating apparatus 40, and are left for around 24 hours in a space adjusted to, for example, a temperature of 60 degrees Celsius and a humidity of 50%. Because the raw web 1 positioned near the core of the bulk roll 2 is moved near the surface of the pancake PC by being rewound on the hub 32, a surface pressure becomes smaller and a strain is recovered. In addition, because the raw web 1 is rewound with a tension weaker than the bulk roll 2, the concavities 3a is recovered (see FIG. 2B) by such the heat treatment. Furthermore, because the raw web 1 is wound on the taper hub 32, one side edge 6a (see FIG. 4) results in being warmed in a state of being pulled more than the other side edge 6b. Thus the one side edge 6a is elongated, and thereby the magnetic tape MT is formed that is curved in width directions along longitudinal directions thereof.

Thus, in accordance with the manufacturing method of the magnetic tape MT related to the embodiment, by rewinding the slit raw web 1 on the taper hub 32 and heating the web 1, the curved magnetic tape MT can be manufactured while recovering the concavities 3a formed on the surface of the magnetic layer 3.

### [Example]

Although examples are described below, the present invention is not limited thereto. Meanwhile, "part" in the examples and comparison examples shows "weight part."

### <Example 1>

Out of undercoat layer coating liquid compositions below, kneading a first agent with a kneader, then adding a second agent and stirring it, dispersing it by a sand mill with making a staying time 90 minutes, and after adding a third agent thereto and stirring and filtering it, it was made an undercoat layer coating liquid.

In addition, other than this, out of magnetic-layer-use coating liquids shown below, kneading a first agent with a kneader, then dispersing it by a sand mill with making a staying time 60 minutes, and adding a second agent of the coating liquid compositions thereto and stirring and filtering it, thus it was made a magnetic-layer-use coating liquid.

### <<Undercoat Layer Coating liquid Composition>>

### (First Agent)

Iron oxide powder (particle diameter: 0.15×0.02 µm): 70 parts
Alumina (α ratio: 50%, particle diameter: 0.05 µm): 8 parts
Carbon black (particle diameter: 15 nm): 25 parts
Stearic acid/butyl stearate (50/50): 3.0 parts
Vinyl chloride copolymer (containing-SO₃Na group: 1.2×10⁻⁴ equivalent/g): 10 parts Polyester urethane resin (Tg: 40 degrees Celsius, containing-SOaNa group: 1×10⁻⁴
equivalent/g): 4.4 parts
Cyclohexanone: 30 parts
Methylethylketone: 60 parts
(Second Agent)
Butyl stearate: 3 parts
Oleyl oleate: 5 parts
Cyclohexanone: 40 parts
Methylethylketone: 60 parts
Toluene: 15 parts
(Third Agent)
Polyisocyanate: 1.5 parts
Cyclohexanone: 8 parts
Methylethylketone: 18 parts
Toluene: 8 parts

### <<Magnetic-Layer-Use Coating liquid Composition>>

### (First Agent)

Ferromagnetic metal powder (Co /Fe, 30 atomic %; Y/(Fe + Co), 3 atomic %; Al/(Fe + Co), 5 wt%; Ca/Fe, 0.002; σs, 155 A·m²/kg; Hc, 188.2 kA/m; photo curing, 9.4; long axis length, 0.10 µm): 100 parts
Vinyl chloride hydroxypropyl acrylate copolymer (containing-SO₃Na group: 0.7×10⁻⁴ equivalent/g): 13.0 parts
Polyester urethane resin (containing-SO₃Na group: 1×10⁻⁴ equivalent/g): 5.5 parts
α -alumina (average particle diameter: 0.15 µm): 12 parts
α -alumina (average particle diameter: 0.05 µm): 4 parts
Carbon black (average particle diameter, 50 nm; DBP (dibutyl phthalate) oil absorption amount, 72 cc/100g): 40 parts
Methyl acid phosphate: 2 parts
Stearic acid: 1.5 parts
Oleyl oleate: 5 parts
Cyclohexanone: 70 parts
Methylethylketone: 250 parts

### (Second Agent)

Polyisocyanate: 2.0 parts
Methylethylketone: 167 parts

In addition, after kneading a back-coat-layer-use coating liquid composition shown below with a continuous kneader, it was dispersed with using a sand mill. Then adding 40 parts of polyisocyanate and 1000 parts of methylethylketone and then filtering it with an average hole diameter of 1 µm, it was made a back-coat-layer-use coating liquid.

### <<Back-Coat-Layer-Use Coating liquid Composition>>

Fine particle carbon black powder (average particle size: 34 nm): 100 parts Rough particle carbon black powder (average particle size: 80 nm): 10 parts α-iron oxide particle (average particle size: 0.1 µm, Mohs hardness: 5): 20 parts α-alumina (hard property inorganic powder: average particle size, 0.2 µm, Mohs hardness: 9): 5 parts
Nitrocellulose resin: 50 parts
Polyurethane resin: 50 parts
Polyester resin: 5 parts
Copper oleic (dispersant): 5 parts
Copper phthalocyanine (dispersant): 5 parts
Methylethylketone: 500 parts
Toluene: 200 parts

Then, coating the undercoat-layer-use coating liquid on the substrate 2 consisting of a film made of a polyethylene naphthalete (PEN) resin of thickness 5 µm so that a thickness of the coating liquid after drying and a calendar treatment became 1.1µm on one side thereof and further coating the magnetic-layer-use coating liquid with dry-on-wet so that a thickness of the magnetic layer 3 after drying and a calendar treatment became 0.05 µm, treating a magnetic field orientation, and then drying with using the dryer 12 and an infrared radiation apparatus (not shown), the magnetic layer 3 was formed.

Thereafter, coating the back-coat-layer-use coating liquid on the other side (opposite side to the magnetic layer 3) of the substrate 2 so that a thickness of the coating liquid after drying became 0.5 µm, the back coat layer 4 was formed. Thus was obtained the raw web 1 where the magnetic layer 3 was provided on the one side of the substrate 2; and the back coat layer 4, on the other side thereof.

Performing a mirror finish treatment for the raw web 1 thus obtained by a five-high calendar consisting of metal rolls under a condition of a temperature of 80 degrees Celsius and a linear pressure of 2 kN/cm (200 kgf/cm), the raw web 1 was wound with a tension of 50 N/m (5.1 kgf/m). The wound bulk roll 2 was stored for 24 hours at 70 degrees Celsius within an oven (strain relief apparatus 20). The obtained bulk roll 2 was slit into a width of 12.65 mm (1/2 inch). The slit raw web 1 was wound with a tension of 1 N (102 gf) on the hub 32 made of aluminum of 200 φ having a taper of 0.3 degree. In this case a reference edge was made a larger side of a hub diameter. The raw web 1 wound on the hub 32 was further stored for 24 hours within an oven (heating apparatus 40) controlled at a temperature of 60 degrees Celsius and a humidity of 60%.

With respect to the magnetic tape MT thus manufactured, a surface polish treatment (air pressure, 0.25 MPa; polish time, 0.1 second) was dispensed by chromium oxide polish tape (KX2000: chromium oxide average particle diameter, 0.6 µm; surface roughness, 0.07 µm). Furthermore, after recording a servo signal in the magnetic layer 3 based on an LTO (Linear Tape Open) Generation 3 format and then winding the magnetic tape MT in a cassette, a magnetic tape cartridge was made.

### <Example 2>

Except that a magnetic material was changed to a barium ferrite magnetic material below, a magnetic tape cartridge was made similarly as in the example 1.

The barium ferrite magnetic material is 2000 nm³ in particle volume, 3 in plate ratio, 3000 Oe in He, 70 m²/g in SSA (Specific Surface Area), and 45 emu/g in σs; and a surface treatment was performed thereto with an aluminum compound.

### <Example 3>

Except that the substrate 2 to be used was changed to a film made of a polyethylene terephthalate (PET) resin, the magnetic tape MT of a was made similarly as in the example 1.

### <Example 4>

Except that the substrate 2 to be used was changed to a film made of a polyvinyl alcohol (PA) resin, the magnetic tape MT was made similarly as in the example 1.

### <Example 5>

Except that a taper of the hub 32 for a heat treatment was changed to 0.5 degree, the magnetic tape MT was made similarly as in the example 1.

### <Example 6>

Except that a heat treatment time after being wound on the hub 32 was changed to 12 hours, the magnetic tape MT was made similarly as in the example 1.

### <Example 7>

After slitting the raw web 1 of a sputter type magnetic tape made by methods below into a width of 1/2 inch, the magnetic tape MT was made with the same heat treatment condition as in the example 1. Hereafter will be described a making method of the sputter type magnetic tape.

Firstly, coating with a gravure coat method an undercoat liquid consisting of 3-glycidyloxypropyl-trimethoxysilane, phenyltriethoxysilane, hydrochloric acid, aluminum acetylacetonate, and ethanol on a substrate similar to that of the example 1, and then drying and curing the undercoat liquid at 100 degrees Celsius, an undercoat layer comprising a silicone resin of a thickness of 0.2 µm was made.

Coating with a gravure coat method a coating liquid, where silica sol of a particle diameter of 18 nm and the undercoat liquid was mixed, on the undercoat layer, a convexity of 15 nm in height was formed in density of 10 pieces /µm².

Next, placing the raw web 1 in a web type sputter apparatus, carrying a film while tightly contacting it on a water-cooled can (15 degrees Celsius) for carrying, and forming on the undercoat layer a barrier layer of a thickness of 20 nm consisting of carbon (C) and a base layer of a thickness of 40 nm consisting of ruthenium (Ru) by a DC magnetron sputter method, subsequently, a magnetic layer of a thickness of 17 nm consisting of (Co₇₀-Pt₂₀-Cr₁₀)₈₈-(SiO₂)₁₂ was formed

Next, placing the raw web 1 in a web type CVD (Chemical Vapor Deposition) apparatus, a nitrogen added DCL (Diamond Like Carbon) protection film of a thickness of 10 nm was formed by an ion beam plasma CVD method of using a nitrogen gas and an ethylene gas as a material gas.

Next, coating a back coat liquid by a wire bar method, where carbon black, calcium carbonate, stearic acid, nitrocellulose, polyurethane, isocyanate hardener are dissolved and dispersed in methylethylketone, and drying the liquid at 100 degrees Celsius, a back coat layer of a thickness of 0.5 µm was made.

Then, coating a mixture liquid of stearyl amine and mono lauryl phosphate of a mol ratio of 1:1 on a surface of the nitrogen added DCL (Diamond Like Carbon) protection film, a lubrication layer was made. A coating amount of the liquid was 10 mg/m². In addition, coating with a gravure coat method a solution, where a perfluaro polyether lubricant (FOMBLIN Z-DOL manufactured by Solvay Solexis S.A.) having a hydroxyl group at a molecule end was dissolved in a fluorine lubricant (HFE-7200 manufactured by SUMITOMO 3M), on a surface of a back coat layer, a lubrication layer was formed. A coating amount of the solution was 10 mg/m².

### <Comparison Examples 1-3>

Except that a heat treatment was not performed for the raw web 1 wound on the hub 32 after slitting, magnetic tapes MT was made similarly as in the example 1.

Out of the magnetic tapes MT, selecting tapes of which curvature values are -2 mm, 0 mm, and +3.5 mm, they are made comparison examples 1, 2, and 3, respectively. Meanwhile, the curvatures of the comparison examples were given when the raw web 1 was manufactured and wound (see FIG. 1A), that is, when the bulk roll 2 was formed.

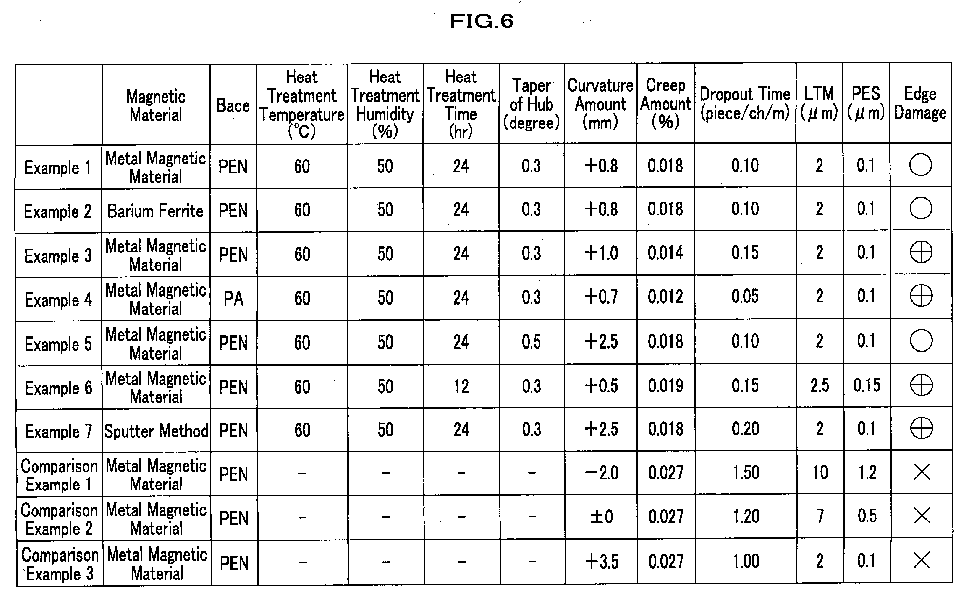

With respect to the magnetic tapes MT of the examples 1 to 7 and the comparison examples 1 to 3, a measurement was made according to methods below. A measurement result is shown in FIG. 6.

Here, "LTM" in FIG. 6 is an abbreviation of "Lateral Tape Motion" and indicates a fluctuation amount of a running position in width directions of the magnetic tapes MT. In addition, "PES" is an abbreviation of "Position Error Signal" and a standard deviation of an amount unable to be servo followed with respect to a fluctuation of the running position in the width directions of the magnetic tapes MT. Meanwhile, the measurement method of each measurement value shown in FIG. 6 is shown below:

### <<Creep Amount>>

Placing a sample, where the magnetic tape MT was cut out to a length of 15.00 mm in a longitudinal direction thereof and a width of 5.00 mm in a width direction thereof, at a chuck portion of TM-9200 (Thermomechanical Measurement Instrument manufactured by ULVAC-RIKO, Inc.) and setting a weight so that a stress of 13 MPa was applied, a deformation amount after 50 hours at 50 degrees Celsius was measured. The deformation amount after 50 hours at 50 degrees Celsius with respect to an initial length excluding an elastic deformation portion just after weighting was made a creep amount. A calculation equation is shown below:

Creep amount (%) = (Length after deformation-Initial length)/Initial length × 100.

### <<Dropout>>

Recording/reproducing a signal of 130 kfci, measuring a time (piece) when a reproduced signal was lowered by not less than 50%, and converting an obtained value to a value per ch (channel) and meter of the magnetic tape MT, it was made a dropout.

### <<LTM>>

Running the magnetic tape MT at a speed of 5.3 m/section and measuring a running position of a tape edge at a position of a magnetic head by a laser displacement meter, a fluctuation amount of the running position was made the LTM.

### <<PES>>

Running the magnetic tape MT at a speed of 5.3 m/section, a standard deviation of an amount unable to be servo followed with respect to a fluctuation of a running position in width directions of the magnetic tapes MT was made the PES.

### <<Edge Damage>>

Repeatedly and reciprocatingly running the magnetic tape MT 5000 times through a whole length thereof and then observing a tape edge, a place where the tape edge was folded at a width of not less than 100 µm was counted. At this time a case of the folded place being less than five places was made "⊕"; not less than five places and less than ten places "O"; not less than ten places "×".

Meanwhile, in measuring the dropout, the LTM, the PES, and the edge damage was used a LTO tape drive "3580-L33" manufactured by IBM Corp.

As shown in FIG. 6, it is proved that in the examples 1 to 7 where the heat treatment was performed after rewinding, the piece of the dropout is remarkably reduced, compared to that of the comparison examples 1 to 3 where the heat treatment was not performed after rewinding. In addition, it is proved that in the examples 1 to 7 the creep amount is reduced, compared to that of the comparison examples 1 to 3. Therefore, it is difficult for the magnetic tape MT to be deformed and it is suitable for a long time storage.

Thus, although the best mode for carrying out the present invention is described in detail, referring to the drawings, the invention is not limited thereto, and various variations are available without departing from the spirit and scope of the invention.

For example, although in the embodiment the magnetic layer 3 and the back coat layer 4 are formed by coating system, the embodiment is not limited thereto, and for example, each of the layers may also be formed, for example, by any one of a sputter method and a vapor deposition method.

In addition, as a coating method by a wet-on-wet system can be cited the following methods:
(1) A method of using any one of such a gravure coating apparatus, a roll coating apparatus, a blade coating apparatus, and an extrusion coating apparatus, firstly forming a non-magnetic layer on the substrate 2, and then the magnetic layer 3 by a substrate pressurizing extrusion coating apparatus while the non-magnetic layer is wet (see Japanese Patent Laid-Open Publication No. S 60-238179, H1-46186, and H2-265672);
(2) A method of using a coating apparatus consisting of a single coating head equipped with two slits for coating a liquid and almost simultaneously forming the magnetic layer 3 and a non-magnetic layer (not shown) on the substrate 2 (Japanese Patent Laid-Open Publication No. S63-88080, H2-17921, and H2-265672); and
(3) A method of using an extrusion coating apparatus with a backup roller and almost simultaneously forming the magnetic layer 3 and a non-magnetic layer (not shown) on the substrate 2 (Japanese Patent Laid-Open Publication No. H2-174965).

In addition, although in the embodiment a magnetic tape is described as an example, the present invention is not limited thereto and is also applicable, for example, to a tape-form recording medium such an optical recording tape.

In addition, in the embodiment, although providing the strain relief process S3 and using the strain relief apparatus 20, it is assumed to relieve the strain of the bulk roll R2, the present invention is not limited thereto; for example, as in a case that the strain of the raw web 1 is smaller, when it is not necessary to provide the strain relief process S3, it goes without saying that such the process may be omitted. Even in a case of the omission, when making the raw web 1 like a roll, the minute convexities 4a are pushed to the front side of the magnetic layer 3 and the concavities 3a result in being formed.

In addition, although the embodiment is adapted to use the taper hub 32, to give a curvature to the magnetic tape MT, and to simultaneously recover the concavities 3a of the magnetic layer 3, it is not limited thereto; it is also available to use a hub without a taper and to recover the concavities 3a of the magnetic layer 3 without giving a curvature.

In addition, in order to heighten the recovery effect of the concavities 3a, although the embodiment is configured to provide the heating apparatus 40 with the humidifier 43 and to increase the humidity of the storing unit 41, the present invention is not limited thereto and may not comprise the humidifier 43. Even in such the case it is enabled to recover the concavities 3a by heat treatment.

## Claims

1. A manufacturing method of a tape-form recording medium (MT) comprising:
a raw web manufacturing process (S1) of forming a data recording layer (3) on one side of a substrate (2) and a back coat layer (4) having a minute convexity (4a) on the other side thereof, and manufacturing raw web
(1) of the tape-form recording medium;
a raw web winding process (S2) of winding the raw web with a predetermined tension;
a raw web rewinding process (S5) of rewinding the raw web; and
a raw web heating process (S6) of heating the raw web rewound.

2. The manufacturing method of the tape-form recording medium according to claim 1 further comprising a strain relief process (S3) of heating the raw web wound and relieving a strain of the raw web after the raw web winding process and before the raw web rewinding process.

3. The manufacturing method of the tape-form recording medium according to claim 1 further comprising a raw web slitting process (S4) of slitting the raw web after the raw web winding process and before the raw web rewinding process, wherein the raw web rewinding process winds the slit raw web.

4. The manufacturing method of the tape-form recording medium according to claim 2 further comprising the raw web slitting process of slitting the raw web after the strain relief process and before the raw web rewinding process, wherein the raw web rewinding process winds the slit raw web.

5. The manufacturing method of the tape-form recording medium according to any one of claims 1 to 4, wherein the raw web is rewound on a hub (32) having a taper on a tape winding face (32a) in the raw web rewinding process.

6. The manufacturing method of the tape-form recording medium according to any one of claims 1 to 5, wherein the data recording layer is a magnetic layer (3) and 1 to 150 nm in thickness.

7. The manufacturing method of the tape-form recording medium according to claim 5, wherein one side length of the raw web out of both sides in width directions thereof is formed longer than the other side length.

8. The manufacturing method of the tape-form recording medium according to claim 6, wherein one side length of the tape-form recording medium obtained in the raw web heating process is formed longer than the other side length out of both sides in width directions of the medium.
